# FASCICULE DE BREVET EUROPEEN

(11) **EP 4 211 512 B1**
(45) Date de publication et mention de la délivrance du brevet: **14.08.2024**
(21) Numéro de dépôt: 21778187.1
(22) Date de dépôt: 07.09.2021
(51) Int. Cl.: G02F 1/155

(54) **DISPOSITIF ÉLECTROCHROME**
ELEKTROCHROME VORRICHTUNG
ELECTROCHROMIC DEVICE

(30) Priorité: 08.09.2020 FR 2009101
(43) Date de publication de la demande: 19.07.2023
(73) Titulaire: UNIVERSITE DE BORDEAUX, 33000 Bordeaux (FR); CENTRE NATIONAL DE LA RECHERCHE SCIENTIFIQUE (CNRS), 75016 Paris (FR); INSTITUT POLYTECHNIQUE DE BORDEAUX, 33400 Talence (FR); GROUPE LUQUET DURANTON, 07100 Annonay (FR)
(72) Inventeur: ROUGIER, Aline, 33600 Pessac (FR); FUTSCH, Romain, 33000 Bordeaux (FR)
(74) Mandataire: Plasseraud IP
(86) Numéro de dépôt international: PCT/FR2021/051526
(87) Numéro de publication internationale: WO 2022/053756

(56) Documents cités:
- US-A1- 2003 227 663
- US-A1- 2007 076 287
- US-A1- 2017 219 903

## Description

### Domaine technique

L'invention concerne un dispositif électrochrome avec des propriétés optiques contrôlées à commandes électriques. Elle concerne également l'utilisation d'un tel dispositif pour des applications les plus diverses.

### Technique antérieure

Un dispositif électrochrome, assimilable à une batterie optique, est un dispositif électrique susceptible de pouvoir moduler ses propriétés optiques sous l'application d'un champ électrique, permettant ainsi d'obtenir un revêtement à commandes électriques dont le changement de couleur ou la capacité de transmission de la lumière est facilement ajustable. De tels revêtements ont montré des applications dans les domaines techniques les plus diverses

On peut ainsi les utiliser en tant que vitrages d'une habitation afin, par exemple, d'ajuster le niveau d'ensoleillement d'une pièce en fonction des conditions extérieures et des souhaits des utilisateurs. On peut également les utiliser, dans le domaine automobile, en tant que pare-brise et/ou vitres latérales ou vitrage du toit d'une voiture, afin de régler le niveau de transparence et notamment de pouvoir régler les rayons lumineux transmis vers le conducteur pour éviter un éventuel éblouissement de ce dernier. On peut également les utiliser en tant qu'écran d'affichage de données. Des applications dans le domaine de l'infrarouge se développent également, telles que la protection thermique dans le domaine spatial pour les satellites, et le camouflage infrarouge dans le domaine militaire.

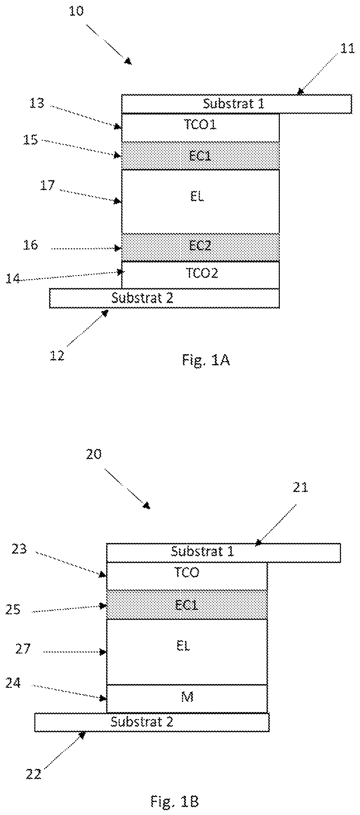

Selon une première configuration et comme l'illustre la figure 1A, les dispositifs électrochromes 10 sont constitués de cinq couches emprisonnées entre deux substrats 11, 12 : une couche d'un matériau électrolyte 17 interposée entre deux couches de matériaux 15, 16, dont au moins un est un matériau électrochrome (à coloration anodique ou cathodique), les couches de matériaux électrochromes étant chacune en contact, par leur face externe, avec une couche d'un matériau collecteur de courant et transparent dans le visible 13, 14. Ces dispositifs sont fabriqués par une succession de couches formant ainsi un empilement : Substrat 1 / TCO 1 / EC1 / EL / EC2 / TCO 2 / Substrat 2 dans laquelle au moins un des substrats est un matériau transparent choisi notamment parmi le verre, le plastique, etc..., l'autre substrat pouvant être opaque (papier par exemple) ou réflecteur (métal par exemple), TCO 1 et TCO 2 sont des oxydes transparents conducteurs électroniques (de la dénomination anglophone « Transparent Conductive Oxide ») utilisés comme collecteur de courant, EC1 et EC2 sont des matériaux électrochromes à conduction mixte (ionique et électronique) et EL est un matériau électrolyte à conduction ionique. Cet empilement de matériaux est également appelé « cellule électrochrome ».

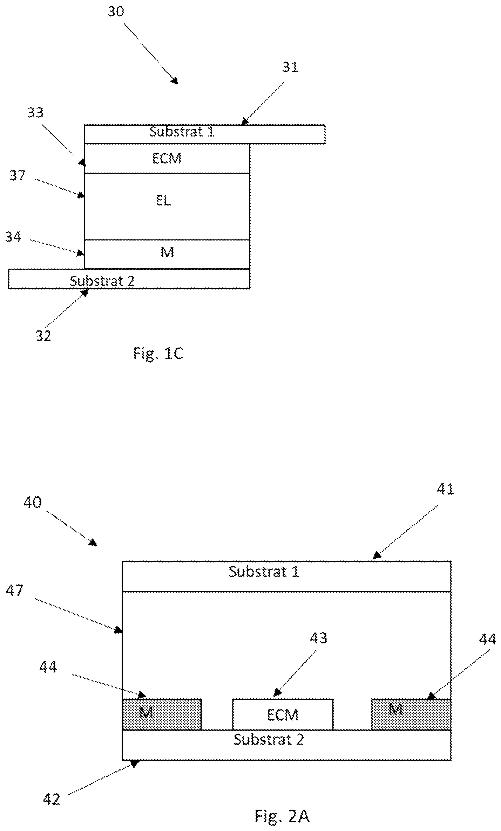

Le fonctionnement du dispositif électrochrome est le suivant. Une différence de potentiel est appliquée entre les deux conducteurs électroniques par un moyen d'alimentation électrique non illustré sur la figure 1. Sous l'effet de cette différence de potentiel les ions au sein de l'électrolyte, se déplacent d'un matériau électrochrome à un autre. Simultanément, par apport des électrons de l'électrode en contact avec le matériau électrochrome, le degré d'oxydation du matériau électrochrome est modifié entraînant un changement de ses propriétés optiques, notamment la couleur. De plus, une inversion de l'effet de champ, permet de déplacer les ions et électrons hors du matériau électrochrome, qui reviendra ainsi à sa couleur initiale de façon réversible. La couche électrochrome est caractérisée par au moins deux états avec des propriétés optiques distinctes: l'état oxydé et l'état réduit. A titre d'exemple, une couche d'oxyde de tungstène est caractérisée par un passage d'un état de coloration bleue à un état d'aspect incolore.

Les oxydes utilisables à titre de TCO1 et TCO2 doivent posséder une conductivité électrique élevée (> 10³ S.cm⁻¹), associée à une transmission moyenne de l'ordre de 85% dans le visible pour pouvoir observer le changement de couleur au niveau de la couche de matériau électrochrome. Pour atteindre cette transmission, les couches de TCOs sont généralement de faible épaisseur, de l'ordre de 150 nm. Les oxydes les plus utilisés en tant que TCO sont l'oxyde d'indium dopé à l'étain In₂O₃ :Sn (ITO) suivi de près par l'oxyde d'étain dopé fluor SnO₂ :F (FTO) et l'oxyde de zinc dopé au gallium ou à l'aluminium.

Les dispositifs électrochromes à cinq couches tels que décrits ci-dessus sont cependant coûteux à fabriquer et ne présentent pas toujours une rapidité de commutation et un contraste suffisant. US 2003/227663 A1, US 2007/076287 A1 et US 2017/219903 A1 représentent des documents utiles à la compréhension de l'invention.

Les inventeurs ont développé un dispositif électrochrome à trois ou quatre couches qui est moins coûteux et plus aisé à fabriquer tout en minimisant le temps de commutation et l'énergie nécessaire au fonctionnement. Un tel dispositif électrochrome est décrit plus en détail dans le document WO2014/135804.

La figure 1B illustre un dispositif électrochrome 20 à quatre couches comprenant :
- une couche conductrice électrique TCO 23 ;
- une couche de matériau électrochrome EC1 25 en contact avec la couche conductrice TCO ;
- une couche de contre-électrode 24 en matériau métallique conducteur M ;
- une couche d'électrolyte 27 en contact avec la couche d'électrode 24 et la couche de matériau électrochrome 25.

La cellule électrochrome formée de quatre couches est prise en sandwich entre deux substrats 21, 22.

L'utilisation d'un matériau métallique à titre de contre-électrode permet de s'affranchir de la nécessité d'utiliser une seconde couche conductrice électrique TCO qui serait en contact avec la contre-électrode, du fait que le matériau métallique constituant la contre-électrode est lui-même conducteur. Cela permet de réduire à quatre le nombre de couches.

La figure 1C illustre un dispositif électrochrome 30 à trois couches comprenant :
- une couche électrochrome 33 ECM présentant une conductivité électronique suffisante ;
- une couche d'électrolyte 37 EL ;
- une couche de contre-électrode métallique 34 M.

La cellule électrochrome à trois couches est prise en sandwich entre deux substrats 31, 32.

L'utilisation d'un matériau à la fois électrochrome et conducteur électrique permet de s'affranchir de la présence de la couche TCO qui serait en contact avec la couche électrochrome. Le dispositif électrochrome est alors uniquement constitué de trois couches.

On distingue deux architectures dans la fabrication des dispositifs électrochromes : architecture verticale et architecture coplanaire.

Les figures 1A-1C illustrent une architecture verticale dans laquelle le dispositif électrochrome est fabriqué soit par une succession de couches : chaque couche est déposée au-dessus de la couche précédente créant ainsi un empilement, soit par l'assemblage via la couche électrolytique de deux demiempilements.

Les figures 2A-2C illustrent le dispositif électrochrome à trois couches dans une architecture coplanaire 40 dans laquelle la couche électrochrome ECM 43 ayant une conductivité électronique suffisante et la contre-électrode métallique M 44 sont disposées côte à côte sans être en contact, dans un même plan, et sont en contact avec un second substrat 42 et l'électrolyte 47, l'électrolyte étant lui-même supporté par un premier substrat 41.

### Problème technique

Bien que ces dispositifs donnent entière satisfaction en termes de fonctionnement, leurs fabrications imposent des contraintes dans le choix des matériaux utilisés pour les substrats, les électrodes, le matériau électrochrome et l'électrolyte, que ce soit dans l'architecture verticale ou dans l'architecture coplanaire. En effet, dans l'architecture verticale, lorsque le premier substrat, forme par exemple la surface d'affichage, il doit être nécessairement réalisé dans un matériau transparent tel que le verre ou le PET ou translucide tel que le papier calque. Dans le cas du dispositif électrochrome à cinq couches et à quatre couches, le matériau formant la couche conductrice électrique doit être également transparente. Le substrat de la couche de contre-électrode peut être un matériau opaque, translucide ou transparent pouvant par exemple être choisi parmi les papiers, les plastiques, les matières textiles, les verres, les métaux, les céramiques, les bois, etc. Dans le cas du dispositif électrochrome à cinq couches, l'électrode de travail doit également être transparente.

Dans l'architecture coplanaire, lorsque le premier substrat en contact avec l'électrode de travail forme par exemple la surface d'affichage, il est nécessairement choisi parmi les matériaux translucides tel que le papier calque ou transparents tels que le verre ou le PET par exemple. La couche d'électrolyte doit être également transparente. Le substrat 2 de la contre-électrode peut être un matériau opaque, translucide ou transparent pouvant par exemple être choisi parmi les papiers, les matières textiles, les verres, les métaux, les céramiques, les bois, etc.

Ainsi, quels que soient l'architecture et le nombre de couches formant le dispositif électrochrome, des contraintes physico-chimiques doivent être prises en compte dans le choix des matériaux électrochromes pour former la couche d'électrode de travail et dans le choix des matériaux pour former la couche d'électrolyte.

Par exemple dans le cas du dispositif électrochrome à cinq couches, au moins une des deux électrodes doit être transparente pour permettre de visualiser un changement de couleur à travers un substrat transparent. L'ITO est généralement utilisé comme électrode transparente. Cependant ce matériau peut être difficilement imprimé. Les dispositifs électrochromes de l'état de la technique ne peuvent donc pas être complètement imprimés, rendant la fabrication plus complexe et plus coûteuse. De même, l'ITO induit également un coût de fabrication élevé dû à l'utilisation d'indium.

Dans le cas du dispositif électrochrome à trois couches, la couche d'électrolyte doit être choisie non seulement dans un matériau transparent pour permettre de visualiser un changement de couleur à travers un substrat transparent, mais il doit permettre également une conduction ionique suffisante pour permettre au matériau électrochrome de changer de couleur. Il doit également être compatible chimiquement avec les couches adjacentes, et permettre notamment le dépôt d'une autre couche au-dessus de l'électrolyte. Enfin, le matériau d'électrolyte doit assurer une isolation électrique entre les deux électrodes.

Par ailleurs, les dispositifs électrochromes de l'état de la technique nécessitent généralement l'utilisation de deux substrats, dont l'un sert de support et l'autre est destiné à protéger la cellule électrochrome ou de support.

La présente invention vise donc à pallier les inconvénients décrits ci-dessus en proposant une nouvelle architecture de dispositifs électrochromes qui permet de s'affranchir des contraintes dans le choix des matériaux utilisés, qui soit moins coûteux et plus aisés à fabriquer en comparaison des dispositifs électrochromes de l'art antérieur.

### Exposé de l'invention

La présente invention a donc pour objet un dispositif électrochrome comprenant
- au moins un substrat ;
- une première électrode comportant une première ouverture et une deuxième électrode comportant une seconde ouverture ;
- les deux électrodes étant positionnées de sorte que les deux ouvertures soient en regard;
- une couche de matériau électrochrome adaptée pour être agencée par rapport à la première ouverture de la première électrode de manière à former au moins une zone de contact électrique entre la couche de matériau électrochrome et la première électrode, ladite couche de matériau électrochrome et ladite première électrode formant ainsi ensemble une électrode de travail et la seconde électrode formant une contre-électrode ;
- une couche d'électrolyte prise en sandwich entre l'électrode de travail et la contre-électrode ;
- un moyen d'alimentation électrique configuré pour appliquer une tension électrique aux deux électrodes.

La première ouverture et la seconde ouverture présentent un contour fermé avec une forme géométrique quelconque. Elle peut être carrée comme dans les deux exemples représentes ci-dessous, ou rectangulaire, ou circulaire, ou ovale, ou de toute autre forme adaptée. Les deux ouvertures traversent dans un plan vertical l'épaisseur des couches d'électrodes.

Dans cette nouvelle architecture de dispositif électrochrome, grâce à la présence des ouvertures, le matériau électrochrome n'est pas intégralement déposé sur l'électrode contrairement aux architectures verticales existantes. De ce fait, la visualisation de son changement de couleur n'est plus obstruée par l'électrode. Cela permet de s'affranchir des contraintes sur le choix des matériaux des électrodes et d'élargir la liste des matériaux, et notamment de s'affranchir de la nécessité d'utiliser une électrode qui serait à la fois conductrice et transparente. Cela permet de réduire notamment le coût de fabrication du dispositif électrochrome. En particulier, la nouvelle architecture permet de remplacer l'ITO, qui est généralement utilisé comme électrode transparente par d'autres matériaux moins coûteux tout en rendant la fabrication plus aisée.

La nouvelle architecture permet également de déposer les différentes couches entièrement par impression, parmi les techniques d'impression on peut citer la sérigraphie, le jet d'encre, la flexographie, le slot-die, la rotogravure. La nouvelle architecture est également compatible avec d'autres techniques de dépôt telles que la pulvérisation cathodique, le sol-gel.

Les différentes parties du dispositif électrochrome peuvent être préparées et assemblées par des techniques de réalisation de couches minces existantes telles que par exemple par enduction au rouleau, flexographie, sérigraphie, trempage-retrait, enduction à la tournette, application au couteau à pelliculer etc... ou un mélange de ces techniques.

Le fait de ne plus déposer la couche de matériau électrochrome sur l'électrode permet d'éviter toute modification visuelle du matériau électrochrome, et d'améliorer ainsi le contraste optique, et donc d'augmenter la qualité fonctionnelle du dispositif électrochrome.

Selon un autre avantage résultant de cette nouvelle architecture, la présence de l'ouverture dans l'électrode permet d'utiliser le substrat comme fond au matériau électrochrome pour observer un changement de couleur de façon plus distincte.

La fabrication du dispositif électrochrome de la présente invention nécessite l'utilisation d'un unique substrat au lieu de deux exigés généralement dans les dispositifs électrochromes de l'état de la technique.

Selon une forme de réalisation de l'invention, l'électrolyte utilisable dans le dispositif électrochrome peut notamment être choisi parmi :
i) les liquides ioniques gélifiés ou plastifiés par au moins un agent gélifiant ou plastifiant ;
ii) Les liquides ioniques mélangés à un monomère/oligomère thermo- ou UV photo-polymérisable,
iii) les solutions électrolytiques d'au moins un sel d'électrolyte et/ou d'au moins un acide en solution dans un solvant, lesdites solutions étant gélifiées ou plastifiées par au moins un agent gélifiant ou plastifiant,
iv) les solutions électrolytiques comprenant au moins un oxyde,
v) les couches minces d'un matériau choisi parmi certains oxydes hydratés tels que par exemple Ta₂O₅ hydraté et ZrO₂ hydraté.

La nature des liquides ioniques utilisables selon l'invention n'est pas critique. Les liquides ioniques sont définis comme étant des sels organiques de point de fusion inférieur ou égal au point d'ébullition de l'eau. Ils se présentent comme des liquides à température ambiante et pression atmosphérique sans ajout de solvant. Ils sont élaborés par association entre un cation et un anion en proportion stoechiométrique assurant ainsi la neutralité électrique du sel. Les cations les plus utilisés ont une structure du type ammonium, imidazolium, pyridinium, pyrrolidinium, phosphonium, thiazolium, quinolinium, tétraminium. Les anions sont de préférence choisis parmi les halogènures (F, Cl, Br, I) ; les anions tétrafluoroborate (BF₄), hexafluorophosphate (PF₆), sulfate (SO₄), hydrogénosulfate (HSO₄), anions avec fonction carboxylate : formiates (HCOO), acétate (CH₃COO), trifluoroacétate (CF₃COO), propanoate (CH₃-CH₂-COO) ; anions sulfonylimide ; anions bis((trifluorométhyl)sulfonyl)imide ((CF₃-SO₂)₂N), bis(méthylsulfonyl)imide ((CH₃-SO₂)₂N), l'anion dicyanamide (N(CN)₂) ; les anions sulfonates : méthylsulfonate (CH₃SO₃), trifluorométhylsulfonate (CF₃SO₃), benzènesulfonate (C₆H₅SO₃), p-toluènesulfonate (CH₃-C₆H₄-SO₃), perfluorobutylsulfonate (C₄F₉SO₃) ; anions sulfinate : (trifluorométhanesulfinate (CF₃SO₂), perfluorobutylsulfinate (C₄F₉SO₂), anions phosphate : diméthyl phosphate C₂H₇O₄P, diéthylphosphate, C₄H₁₁O₄P, dihydrogénophosphate (H₂PO₄), hydrogénophosphate (HPO₄) et phosphate (PO₄) ; les anions phosphonate tels que, par exemple, les méthylphosphonate (CH₃PO₃H), éthylphosphonate (C₂H₅PO₃H) ; ainsi que d'autres anions comme, par exemple, l'hexafluoroarsénate (AsF₆), l'hexafluoroniobiate (NbF₆) et l'hexafluoroantimonate (SbF₆)

Les sels d'électrolytes utilisables selon l'invention peuvent par exemple être choisis parmi les sels de lithium tels que par exemple le bis(trifluorométhanesulfonyl)imide de lithium (LiTFSI), le perchlorate de lithium (LiClO4), l'hexafluorophosphate de lithium (LiPF6), les sels de sodium tels que par exemple le bis(trifluorométhanesulfonyl)imide de sodium (NaTFSI), et certains acides tels que l'acide de bis(trifluorométhanesulfonyl)imide (HTFSI), l'acide phosphorique et l'acide sulfurique.

Le solvant des solutions électrolytiques définies au point iii) ci-dessus peut être choisi parmi les solvants aprotiques polaires tels que par exemple les carbonates cycliques et linéaires (par exemple le carbonate d'éthylène, le carbonate de propylène, le carbonate de butylène, le carbonate de diméthyle, le carbonate de diéthyle, le carbonate de dipropyle, le carbonate d'éthyle-méthyle, le carbonate de vinylène), les éthers cycliques (par exemple le tetrahydrofurane), les éthers de polyéthylène glycols de formule RO(CH₂CH₂O)ₙR' dans lesquels R et R' sont CH₃ ou C₂H₅, et 1 ≤ n ≤ 12, les tétraalkyl sulfamides de formule RR'NSO₂NR"R‴ dans lesquels R, R', R" et R‴ sont CH₃ ou C₂H₅, la 3-méthy1-1,3-oxazolidine-2-one, et les esters cycliques (par exemple la γ-butyroiactone).

Le solvant des solutions électrolytiques définies au point iii) peut également être un solvant aqueux tel que de l'eau.

Les agents gélifiants utilisables pour solidifier les liquides ioniques ou les solutions d'au moins un sel d'électrolyte et/ou d'au moins un acide peuvent par exemple être choisis parmi la cellulose, la nitrocellulose, les carboxyméthylcelluloses (CMC), etc...

Les agents plastifiants utilisables pour solidifier les liquides ioniques ou les solutions d'au moins un sel d'électrolyte et/ou d'au moins un acide peuvent par exemple être choisis parmi des composés pré-polymérisés ou polymérisant durant l'assemblage du dispositif électrochrome et résultant de la polymérisation d'un ou de plusieurs monomères choisis parmi l'oxyde d'éthylène, l'oxyde de propylène, le méthacrylate de méthyle, l'acrylate de méthyle, l'acrylonitrile, le méthacrylonitrile, et le fluorure de vinylidène, ledit polymère ayant une structure de type linéaire, de type peigne, statistique, alterné ou à bloc, réticulé ou non. Parmi de tels polymères on peut notamment citer le poly (méthyl méthacrylate (PMMA), le polyoxyde d'éthylène (POE) le poly acrylonitrile (PAN), et leurs mélanges.

La quantité d'agent plastifiant ou/et gélifiant présent au sein du liquide ionique ou au sein de la solution électrolytique dépend de la viscosité initiale du liquide ionique ou de la solution électrolytique, de sa nature, etc....

Lorsque l'électrolyte solide est un liquide ionique plastifié ou gélifié, la quantité d'agent plastifiant ou gélifiant peut varier de 20 à 70 % environ en masse par rapport à la masse du liquide ionique, et encore plus préférentiellement, de 40 à 50 % environ.

Lorsque l'électrolyte solide est une solution électrolytique plastifiée ou gélifiée telle que définie ci-dessus au point iii), la quantité d'agent plastifiant ou gélifiant peut varier de 20 à 80 % en masse par rapport à la masse totale de la solution électrolytique initiale, et encore plus préférentiellement, de 30 à 60 %.

Selon une forme de réalisation, l'électrolyte peut être un matériau opaque ou un matériau transparent.

Selon une forme de réalisation, l'électrolyte présente de préférence une épaisseur variant de quelques nanomètres à plusieurs centaines de micromètres, de préférence de 100 nm à 100 µm.

Selon une forme de réalisation de l'invention, la première électrode et la seconde électrode sont en matériaux conducteurs électriques. Parmi les matériaux, on peut notamment citer le cuivre, le fer, l'argent, le platine, l'or, le carbone et les polymères conducteurs. Le carbone peut être de différents types, nanotubes de carbone, graphite ou noir de carbone.

Les deux électrodes peuvent se présenter sous la forme d'une couche mince, ayant une épaisseur variant de 100 nm à 100 µm.

Selon un mode de réalisation de l'invention, le matériau électrochrome comprend au moins un polymère conducteur choisi parmi le poly(3,4- éthylène dioxythiophène) (PEDOT), le poly(3,4-éthylène dioxysélénophène) (PEDOS), le poly(3,4- propylène dioxythiophène) (ou PProDOT), le 4,7-bis-(2,3-dihydrothiéno[3,4-b][1,4]dioxin-5-y1)-2- phényl- 1H-b enzo [d] imidazole, le 1,4-bis-(2-(3,4-éthylènedioxy)thiényl)benzène (ou BEDOT-B), les copolymères à base de pyrrole et de 3,4-éthylènedioxythiophène (ou EDOT), les copolymères de 4-aminodiphénylamine et de 4,4'-diaminodiphénylsulfone, l'acide poly[2,5-di(2-thiényl)-1H-pyrrole-1-(p benzoïque)], les poly(9H-N-alkylcarbazoles), poly(3,6-dinitro-9H-N-alkylcarbazoles) et poly(3,6-diamino-9H-N-alkylcarbazoles); les copolymères de tris-[4-(2-thiényl)phényl]amine et de 2,2'-bithiophène, la poly(tris(4-sélèn-2-yl)phénylamine, la poly(2,3,5,6-tetrafluoroaniline), le poly(3,4-éthylènedioxypyrrole), le poly(aniline-co-éthy1-4-aminobenzoate), le poly(1-(3-pyridiny1)-2, 5 -di(2-thiény1)- 1H-pyrrole) et le poly(1-(1,10-phénanthroliny1)-2, 5 - di(2-thiény1)-1H-pyrrole) ;
- un oxyde électrochrome choisi parmi : le WO3, NiO, IrOx, V2O5, Nb2O5, CoOx, CeO2, TiO2,
- un composé hybride polymère-oxyde;
- les viologènes ;
- un composé hexacyanométallate de la famille des couleurs de Prusse tel que le bleu de Prusse Fe4[Fe(CN)6]3.

L'épaisseur des matériaux électrochromes varie en fonction de la nature des matériaux utilisés. Elle est comprise généralement entre 100 nm et 100 µm.

Selon une forme de réalisation de l'invention dans laquelle le dispositif électrochrome comprend un unique substrat, ce dernier peut être un matériau opaque, translucide ou transparent pouvant par exemple être choisi parmi les papiers, les plastiques, les matières textiles, les verres, les métaux, les céramiques, le bois etc.

Selon une autre forme de réalisation de l'invention dans laquelle le dispositif électrochrome comprend un premier substrat et un second substrat, la cellule électrochrome constituée de la contre-électrode, la couche d'électrolyte et l'électrode de travail étant positionnée entre les deux substrats, un des deux substrats est un matériau translucide ou transparent et l'autre substrat peut être un matériau opaque, translucide ou transparent pouvant par exemple être choisi parmi les papiers, les plastiques, les matières textiles, les verres, les métaux, les céramiques, le bois etc.

Enfin l'invention a également pour objet les différentes applications et utilisations du dispositif électrochrome pour l'affichage de données, la fabrication de rétroviseurs automobiles et de visières, la fabrication de vitrages de bâtiments ou le camouflage optique dans l'infrarouge.

### Brève description des dessins

D'autres caractéristiques, détails et avantages de l'invention apparaîtront à la lecture de la description détaillée ci-après, et à l'analyse des dessins annexés, sur lesquels
**Fig. 1A**
   [Fig. 1A] montre un dispositif électrochrome présentant une architecture verticale de l'état de la technique à cinq couches ;
**Fig. 1B**
   [Fig. 1B] montre un dispositif électrochrome présentant une architecture verticale de l'état de la technique à quatre couches ;
**Fig. 1C**
   [Fig. 1C] montre un dispositif électrochrome présentant une architecture verticale de l'état de la technique à trois couches ;
**Fig. 2A**
   [Fig. 2A] montre un dispositif électrochrome à trois couches de l'état de la technique dans une architecture coplanaire selon une vue de section ;
**Fig. 2B**

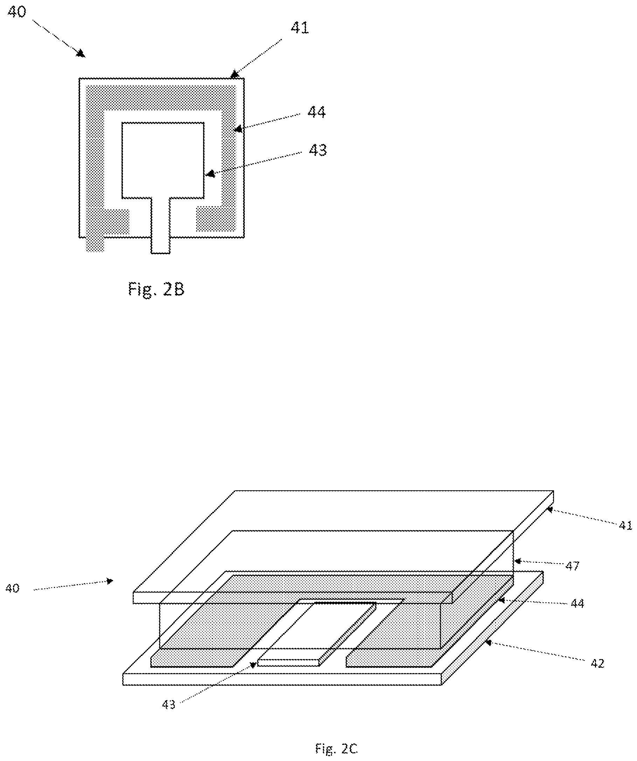

   [Fig. 2B] montre un dispositif électrochrome à trois couches de l'état de la technique dans une architecture coplanaire selon une vue de dessus ;
**Fig. 2C**
   [Fig. 2C] montre un dispositif électrochrome à trois couches de l'état de la technique dans une architecture coplanaire selon une vue en perspective ;
**Fig. 3**

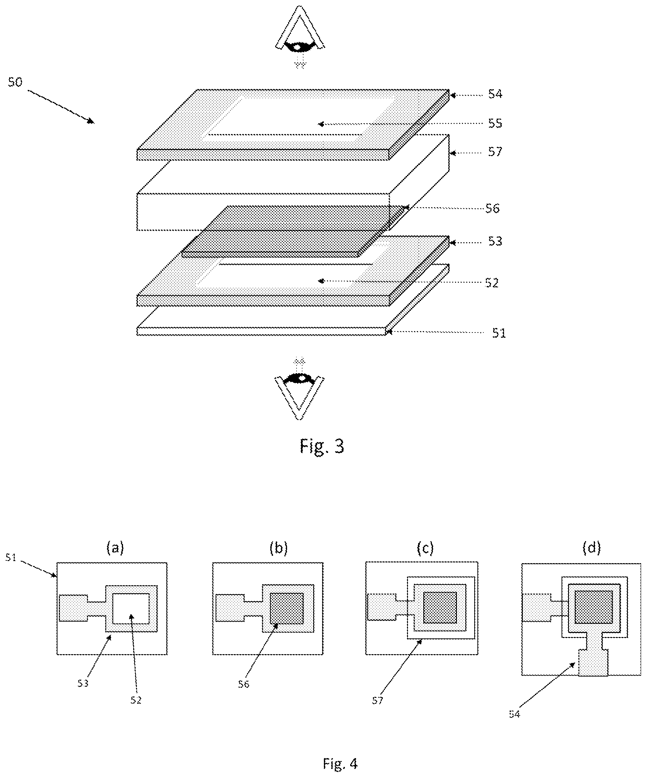

   [Fig. 3] montre un dispositif électrochrome selon un premier mode de réalisation de l'invention ;
**Fig. 4**
   [Fig. 4] montre schématiquement les différentes étapes de fabrication du dispositif électrochrome de la figure 3 ;
**Fig. 5**

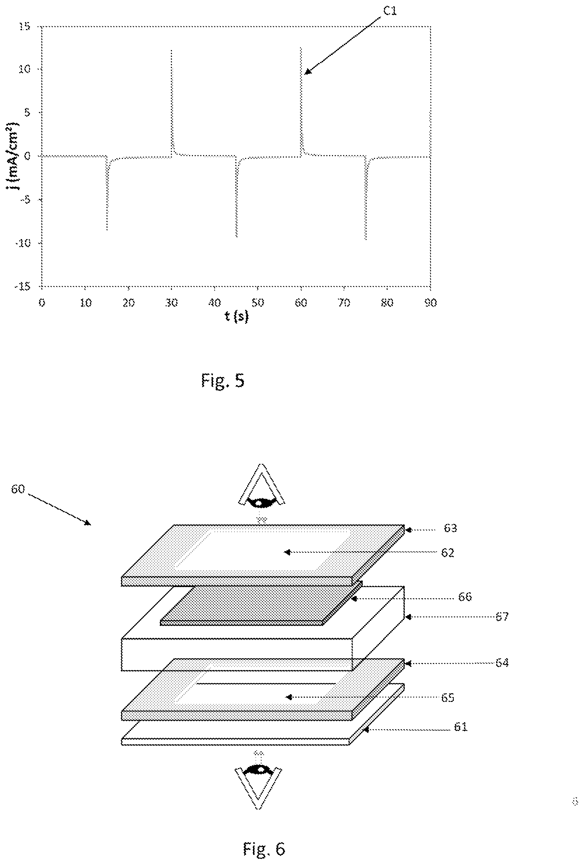

   [Fig. 5] montre une courbe de chronoampérométrie obtenue du dispositif électrochrome de la figure 3 avec la densité de courant (en mA/cm²) en ordonnées et le temps en abscisses (en seconde) ;
**Fig. 6**
   [Fig. 6] montre un dispositif électrochrome selon un deuxième mode de réalisation de l'invention ;
**Fig. 7**

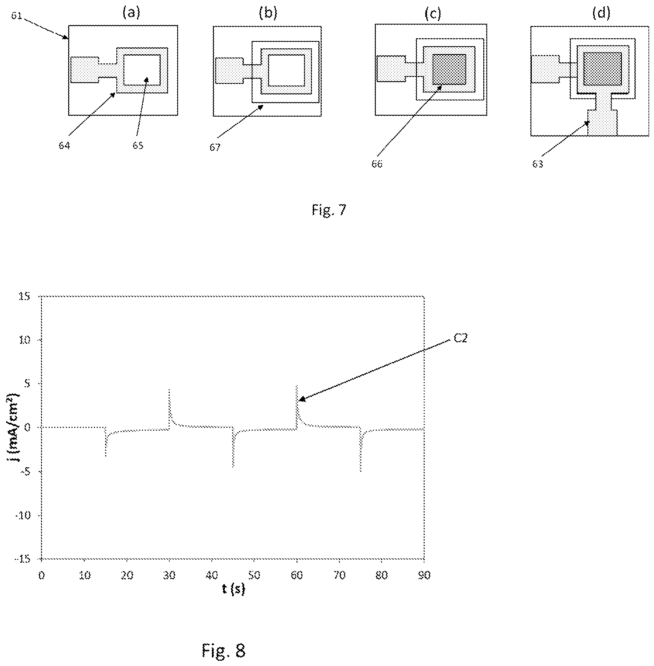

   [Fig. 7] montre schématiquement les différentes étapes de fabrication du dispositif électrochrome de la figure 6 ;
**Fig. 8**
   [Fig. 8] montre une courbe de chronoampérométrie obtenue du dispositif électrochrome de la figure 6 avec la densité de courant (en mA/cm²) en ordonnées et le temps en abscisses (en seconde).

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Selon une première forme de réalisation de l'invention et en référence à la figure 3, le dispositif électrochrome 50 comprend un unique substrat 51, une première électrode 53 et une couche de matériau électrochrome 56 placée dans une première ouverture 52 ménagée dans la première électrode pour former une électrode de travail, une couche d'électrolyte 57, une seconde électrode 54 formant la contre-électrode dans laquelle est ménagée une seconde ouverture 55.

La couche de matériau électrochrome est adaptée pour être placée dans la première ouverture en formant une zone de contact électrique entre la couche de matériau électrochrome 56 et la première électrode 53. La couche de matériau électrochrome est agencée dans la première ouverture de manière à former la zone de contact électrique. Cette zone de contact électrique résulte par exemple par un contact latéral entre une zone du bord intérieur de la première ouverture et une zone du pourtour de la couche de matériau électrochrome.

Selon une forme de réalisation et comme visible sur la figure 3, la couche de matériau électrochrome 56 peut être sensiblement de la même taille et de la même forme que la première ouverture 52.

En variante, la couche de matériau électrochrome 56 est légèrement plus grande que la première ouverture 52. Ainsi, le pourtour de la couche de matériau électrochrome 56 déborde légèrement la première ouverture 52.

Selon une forme de réalisation, la couche de matériau électrochrome 56 est placée dans la première ouverture 52 de telle sorte que la surface de la couche de matériau électrochrome et la surface de la première électrode 53 qui sont en contact avec la couche d'électrolyte sont alignées et dans la continuité l'une de l'autre. On entend par là que les deux surfaces ne forment pas une marche. Selon une autre forme de réalisation, la couche de matériau életcrochrome 56 est placée dans la première ouverture 52 de telle sorte qu'une zone périphérique de la surface de la couche de matériau électrochrome 52 couvrent le pourtour de la première ouverture.

Selon l'invention, le dispositif électrochrome comprend en outre un moyen d'alimentation électrique raccordé aux électrodes pour appliquer une tension électrique aux deux électrodes afin de commander le changement de couleur réversible entre un état oxydé et un état réduit de la couche de matériau électrochrome.

La contre-électrode 54 comprend donc une surface en contact avec la couche d'électrolyte 57 et une surface formant une surface libre. Dans le cas où la surface de l'unique substrat 51 opposée à celle qui est en contact avec l'électrode de travail forme une surface d'affichage à travers laquelle un utilisateur représenté par un oeil sur la figure 3, observe le changement de couleur de la couche de matériau électrochrome 56, le substrat doit être en matériau transparent. Dans le cas où la surface libre de la contre-électrode 54 forme une surface d'affichage et l'utilisateur observe le changement de couleur de la couche de matériau électrochrome à travers la seconde ouverture 55, la couche d'électrolyte 57 doit être un matériau transparent. Dans ce cas, le substrat 51 qui est placé sous la couche de matériau électrochrome peut être avantageusement utilisé comme fond de contraste.

Selon une seconde forme de réalisation de l'invention et en référence à la figure 6, le dispositif électrochrome 60 comprend un unique substrat 61, une seconde électrode formant la contre-électrode 64 dans laquelle est ménagée une seconde ouverture 65, une couche d'électrolyte 67, une première électrode 63 et une couche de matériau électrochrome 66 placée dans une première ouverture 62 ménagée dans la première électrode 63 pour former ensemble une électrode de travail. Dans cette seconde forme de réalisation, la contre-électrode 64 comprend une surface en contact avec le substrat 61 et une surface en contact avec la couche d'électrolyte 67. L'électrode de travail comprend une surface en contact avec la couche d'électrolyte et une surface libre.

Dans le cas où la surface de l'unique substrat opposée à celle qui est en contact avec la contre-électrode forme une surface d'affichage à travers laquelle un utilisateur observe le changement de couleur de la couche de matériau électrochrome, le substrat et la couche d'électrolyte doivent être en matériau transparent. Dans le cas où la surface libre de l'électrode de travail forme une surface d'affichage orientée vers l'utilisateur, il n'y pas de contrainte sur le choix des matériaux en termes de transparence puisque l'utilisateur peut visualiser le changement de couleur directement via la première ouverture 62 ménagée dans la première électrode 63.

Grâce à cette nouvelle architecture, il est possible de déposer les matériaux du dispositif couche par couche, par conséquent il n'est plus nécessaire d'utiliser un second substrat qui est utilisé généralement comme support d'électrode dans le procédé de lamination dans les architectures de l'état de la technique.

Il est également possible d'ajouter un second substrat. Dans ce cas, l'un des deux substrats doit être un matériau transparent pour pouvoir visualiser le changement de couleur opéré dans la couche électrochrome.

Dans les deux formes de réalisation illustrées sur les figures 3 et 6, il est possible de déposer une couche de protection via diverses techniques pour protéger le dispositif électrochrome vis-à-vis de l'environnement : oxygène, lumière, humidité.

Les deux formes de réalisation du dispositif électrochrome sont illustrées ci-dessus à l'aide de deux exemples.

### Exemples

### Exemple 1

Dans cet exemple 1, on a préparé le dispositif électrochrome de la figure 3 dont l'ordre de dépôt pour former l'empilement est le suivant :
- un substrat 51 : papier dont la surface qui reçoit la couche d'électrode peut être traitée ;
- une première électrode 53 : une couche d'encre métallique d'argent et une deuxième couche carbone conducteur ;
- une couche de matériau électrochrome 56 : encre comprenant un polymère électrochrome poly(3,4-éthylènedioxy)thiophène (PEDOT) et un polymère conducteur polystyrène sulfonate) (PSS);
- une couche d'électrolyte 57 : l'électrolyte a été préparé en utilisant du LiTFSI:EmimTFSI (1:9 %mol) et un photopolymère UV ;
- une seconde électrode 54 : une couche d'encre carbone et une deuxième couche d'encre métallique.

La figure 4 illustre les différentes étapes de dépôt pour réaliser le dispositif électrochrome de la figure 3. Les couches d'encres métallique d'argent et de carbone ont été déposées par sérigraphie sur le substrat papier 51 pour former la première électrode 53. La première électrode 53 est connectée à une alimentation électrique par l'intermédiaire d'une piste conductrice. Une première ouverture 52 est réalisée dans la première électrode grâce au motif spécifique du masque de sérigraphie. Une couche de matériau électrochrome 56 de PEDOT: PSS a été déposée industriellement en sérigraphie sur la première électrode dans la première ouverture. La première électrode et la couche de matériau électrochrome déposée dans la première ouverture forment ensemble une électrode de travail. La couche d'électrolyte 57 a été obtenue en mélangeant du LiTFSI : EmimTFSI (1 :9%mol) et du photopolymère UV. La couche d'électrolyte 57 est ensuite déposée sur l'électrode de travail en sérigraphie et « durcit » par exposition UV. Dans une dernière étape, une seconde électrode 54 qui présente sensiblement la même forme et la même taille que la première électrode est déposée sur l'électrolyte par sérigraphie. Cette seconde électrode forme la contre-électrode qui est connectée à une alimentation électrique via une piste conductrice et en utilisant les mêmes matériaux que ceux employés pour la contre-électrode. Cette alimentation électrique permet d'appliquer une différence de potentiel électrique entre les deux électrodes.

Le dispositif électrochrome de la figure 3 a ensuite été testé, dans le domaine de potentiel 0 à - 1,5 V. La figure 5 montre un extrait C1 des courbes de chronoampérométrie du dispositif électrochrome ainsi obtenu, la densité de courant (en mA/cm²) étant fonction du temps (en secondes). Cet extrait permet de montrer la forte vitesse de commutation du système. La commutation du dispositif électrochrome s'opère en moins de 3 secondes en coloration et en 2 secondes en décoloration pour une surface de 2 cm2, ce qui est aussi rapide que les dispositifs électrochromes de l'état de la technique.

### Exemple 2

Dans cet exemple 2, on a préparé le dispositif électrochrome de la figure 6 dont l'ordre de dépôt pour former l'empilement est le suivant :
- un substrat 61: papier;
- une électrode 64 :une couche d'encre métallique d'argent ;
- une couche d'électrolyte 67 : l'électrolyte a été préparé en utilisant du LiTFSI:EmimTFSI (1:9 %mol) et un photopolymère UV ;
- une couche de matériau électrochrome 66 : encre comprenant un polymère électrochrome poly(3,4-éthylènedioxy)thiophène (PEDOT) et un polymère conducteur polystyrène sulfonate) (PSS) ;
- une électrode 63 : une couche d'encre métallique d'argent.

La figure 7 illustre les différentes étapes de dépôt pour réaliser le dispositif électrochrome de la figure 6. L'encre métallique d'argent a été déposée par sérigraphie sur un substrat papier 61 pour former une seconde électrode 64 avec une ouverture 65. Cette seconde électrode forme la contre-électrode qui est connectée à une alimentation électrique via une piste conductrice et en utilisant les mêmes matériaux que ceux employés pour la contre-électrode. Une couche d'électrolyte 67 comprenant du LiTFSI:EmimTFSI (1:9%mol) et du photopolymère UV est déposée sur la contre-électrode 64 par sérigraphie puis « durcit » par exposition UV. Une couche de matériau électrochrome 66 de PEDOT: PSS a été déposée industriellement par sérigraphie sur la couche d'électrolyte 67. Dans une dernière étape, une première électrode 63 qui présente sensiblement la même forme et la même taille que la contre-électrode est déposée par sérigraphie et comprenant une ouverture 62. La couche de matériau électrochrome et la première électrode forment ainsi l'électrode de travail qui est reliée à une alimentation électrique via une piste conductrice utilisant le même matériau que la première électrode. Cette alimentation électrique permet l'application d'une différence de potentiel entre les deux électrodes.

La stabilité électrochimique du dispositif électrochrome de la figure 6 a ensuite été testée, dans le domaine de potentiel 0 à - 1,5 V. La figure 8 montre un extrait C2 des courbes de chronoampérométrie du dispositif électrochrome ainsi obtenues, la densité de courant (en mA/cm²) étant fonction du temps (en secondes). Cet extrait permet de montrer la forte vitesse de commutation du système. La commutation du dispositif électrochrome s'opère en moins de 3 secondes en coloration et en 2 secondes en décoloration pour une surface de 2 cm2, ce qui est aussi rapide que les dispositifs électrochromes de l'état de la technique.

Les courbes de chronoampérométrie obtenues pour les deux exemples montrent que la présence des ouvertures dans les électrodes n'affecte pas la stabilité électrochimique du dispositif électrochrome dans les conditions utilisées pour la coloration et la décoloration respectivement. Ceci permet, dans le cas d'une industrialisation du dispositif électrochrome conformément à la présente invention, de diminuer fortement le coût de production car l'utilisation d'une couche d'oxyde transparente conductrice réalisée par dépôt physique (PVD) ou dépôt chimique en phase vapeur (CVD) n'est plus requise.

### Application industrielle

L'invention peut trouver à s'appliquer notamment dans divers domaines. Le dispositif électrochrome de la présente invention peut avantageusement être utilisé pour :
- l'affichage de données (écran de textes et/ou images, système de pixellisation, panneaux de signalisation, authentification de produits contrefaits, etc...) ;
- la fabrication de rétroviseurs automobiles et de visières, en particulier de visières de casques de moto. L'utilisation du dispositif électrochrome permet d'éviter l'éblouissement lié aux phares des autres véhicules et du soleil ;
- la fabrication de vitrage de bâtiments, afin de limiter l'ensoleillement durant l'été ou la perte de la chaleur des pièces pendant l'hiver ;
- la fabrication de contrôle thermique et camouflage thermique en modulant l'absorption dans l'infrarouge.

## Revendications

1. Dispositif électrochrome (50, 60) comprenant
- au moins un substrat (51, 61) ;
- une première électrode (53, 63) comportant une première ouverture (52, 62) et une deuxième électrode (54, 64) comportant une seconde ouverture (55, 65) ;
- les deux électrodes étant positionnées de sorte que les deux ouvertures soient en regard;
- une couche de matériau électrochrome (56, 66) placée dans la première ouverture (52, 62) de la première électrode de manière à former au moins une zone de contact électrique entre la couche de matériau électrochrome et la première électrode, ladite couche de matériau électrochrome et ladite première électrode formant ainsi ensemble une électrode de travail et la seconde électrode formant une contre-électrode ;
- une couche d'électrolyte (57, 67) prise en sandwich entre l'électrode de travail et la contre-électrode ;
- un moyen d'alimentation électrique configuré pour appliquer une tension électrique aux deux électrodes.

2. Dispositif électrochrome selon la revendication 1, dans lequel la première électrode et la seconde électrode sont en matériaux conducteurs électriques.

3. Dispositif électrochrome selon la revendication 2, dans lequel lesdites électrodes sont choisies parmi le cuivre, le fer, l'argent, le platine, l'or, le carbone et les polymères conducteurs.

4. Dispositif électrochrome selon l'une des revendications précédentes, dans lequel la couche d'électrolyte (57, 67) est un matériau transparent.

5. Dispositif électrochrome selon l'une des revendications 1 à 3, dans lequel la couche d'électrolyte (57, 67) est un matériau opaque.

6. Dispositif électrochrome selon l'une des revendications précédentes, dans lequel la couche d'électrolyte est choisie parmi :
i) les liquides ioniques gélifiés ou plastifiés par au moins un agent gélifiant ou plastifiant ;
ii) Les liquides ioniques mélangés à un monomère/oligomère thermo- ou UV photo-polymérisable,
iii) les solutions électrolytiques d'au moins un sel d'électrolyte et/ou d'au moins un acide en solution dans un solvant, lesdites solutions étant gélifiées ou plastifiées par au moins un agent gélifiant ou plastifiant,
iv) les solutions électrolytiques comprenant au moins un oxyde,
v) les couches minces d'un matériau comprenant au moins un oxyde hydraté choisi parmi des oxydes hydratés tels que par exemple Ta₂O₅ hydraté et ZrO₂ hydraté.

7. Dispositif électrochrome selon l'une des revendications précédentes, dans lequel le matériau électrochrome comprend au moins un polymère conducteur choisi parmi le poly(3,4- éthylène dioxythiophène), le poly(3,4-éthylène dioxysélénophène), le poly(3,4- propylène dioxythiophène), le 4,7-bis-(2,3-dihydrothiéno[3,4-b][1,4]dioxin-5-y1)-2- phényl- 1H-b enzo [d] imidazole, le 1,4-bis-(2-(3,4-éthylènedioxy)thiényl)benzène, les copolymères à base de pyrrole et de 3,4-éthylènedioxythiophène, les copolymères de 4-aminodiphénylamine et de 4,4'-diaminodiphénylsulfone, l'acide poly[2,5-di(2-thiényl)-1H-pyrrole-1-(pbenzoïque)], les poly(9H-N-alkylcarbazoles), poly(3,6-dinitro-9H-N-alkylcarbazoles) et poly(3,6-diamino-9H-N-alkylcarbazoles); les copolymères de tris-[4-(2-thiényl)phényl]amine et de 2,2'-bithiophène, la poly(tris(4-sélèn-2-yl)phénylamine, la poly(2,3,5,6-tetrafluoroaniline), le poly(3,4-éthylènedioxypyrrole), le poly(aniline-co-éthy1-4-aminobenzoate), le poly(1-(3-pyridiny1)-2, 5 -di(2-thiény1)- 1H-pyrrole) et le poly(1-(1,10-phénanthroliny1)-2, 5 - di(2-thiény1)- 1H-pyrrole),
- un oxyde électrochrome choisi parmi : le WOs, NiO, IrOx, V₂O₅, Nb₂O₅, CoOₓ, CeO₂, TiO₂,
- un composé hybride polymère-oxyde,
- des viologènes,
- un composé hexacyanométallate de la famille des couleurs de Prusse tel que le bleu de Prusse Fe₄[Fe(CN)₆]₃.

8. Dispositif comprenant un unique substrat selon l'une des revendications précédentes, dans lequel ledit substrat est un matériau opaque, translucide ou transparent choisi parmi les papiers, les plastiques, les matières textiles, les verres, les métaux, les céramiques, et le bois.

9. Dispositif selon l'une des revendications 1 à 7, comprenant :
- un premier substrat ;
- un second substrat, et dans lequel l'un des deux substrats est un matériau translucide ou transparent et l'autre substrat est un matériau opaque, translucide ou transparent choisi parmi les papiers, les plastiques, les matières textiles, les verres, les métaux, les céramiques, et le bois.

10. Utilisation d'un dispositif électrochrome tel que défini selon l'une des revendications précédentes, pour l'affichage de données, la fabrication de rétroviseurs automobiles et de visières, la fabrication de vitrages de bâtiments ou le camouflage optique dans l'infrarouge.

## Patentansprüche

1. Elektrochrome Vorrichtung (50, 60), umfassend:
- wenigstens ein Substrat (51, 61),
- eine erste Elektrode (53, 63) mit einer ersten Öffnung (52, 62) und eine zweite Elektrode (54, 64) mit einer zweiten Öffnung (55, 65),
- wobei die beiden Elektroden derart positioniert sind, dass die beiden Öffnungen einander zugewandt sind,
- eine Schicht aus elektrochromem Material (56, 66), die in der ersten Öffnung (52, 62) der ersten Elektrode angeordnet ist, um wenigstens einen elektrischen Kontaktbereich zwischen der Schicht aus elektrochromem Material und der ersten Elektrode zu bilden, wobei die Schicht aus elektrochromem Material und die erste Elektrode zusammen eine Arbeitselektrode bilden und die zweite Elektrode eine Gegenelektrode bildet;
- eine Elektrolytschicht (57, 67), die zwischen der Arbeitselektrode und der Gegenelektrode sandwichartig angeordnet ist,
- ein Stromversorgungsmittel, das dazu ausgebildet ist, an beide Elektroden eine elektrische Spannung anzulegen.

2. Elektrochrome Vorrichtung nach Anspruch 1, wobei die erste Elektrode und die zweite Elektrode aus elektrisch leitfähigen Materialien bestehen.

3. Elektrochrome Vorrichtung nach Anspruch 2, wobei die Elektroden aus Kupfer, Eisen, Silber, Platin, Gold, Kohlenstoff und leitfähigen Polymeren gewählt sind.

4. Elektrochrome Vorrichtung nach einem der vorhergehenden Ansprüche, wobei die Elektrolytschicht (57, 67) ein transparentes Material ist.

5. Elektrochrome Vorrichtung nach einem der Ansprüche 1 bis 3, wobei die Elektrolytschicht (57, 67) ein opakes Material ist.

6. Elektrochrome Vorrichtung nach einem der vorhergehenden Ansprüche 30, wobei die Elektrolytschicht gewählt ist aus:
i) lonischen Flüssigkeiten, die mit wenigstens einem Gelier- oder Plastifizierungsmittel geliert oder plastifiziert wurden,
ii) lonische Flüssigkeiten, die mit einem thermo- oder UV-licht-polymerisierbaren Monomer/Oligomer gemischt sind,
iii) Elektrolytlösungen aus wenigstens einem Elektrolytsalz und/oder wenigstens einer Säure in Lösung in einem Lösungsmittel, wobei die Lösungen mit wenigstens einem Gelier- oder Plastifizierungsmittel geliert oder plastifiziert sind,
iv) Elektrolytlösungen, die wenigstens ein Oxid umfassen,
v) Dünnschichten aus einem Material, das wenigstens ein hydratisiertes Oxid umfasst, das aus hydratisierten Oxiden wie beispielsweise Ta₂O₅-Hydrat und ZrO₂-Hydrat gewählt ist.

7. Elektrochrome Vorrichtung nach einem der vorhergehenden Ansprüche, wobei das elektrochrome Material wenigstens ein leitfähiges Polymer umfasst, gewählt aus Poly(3,4-ethylendioxythiophen), Poly(3,4-ethylendioxyselenophen), Poly(3,4-propylendioxythiophen), 4,7-Bis-(2,3-dihydrothieno[3,4-b][1,4]dioxin5-yl)-2-phenyl-1H-benzo[d]imidazol, 1,4-Bis-(2-(3,4-ethylendioxy)thienyl)benzol, Copolymeren auf der Basis von Pyrrol und 3,4-Ethylendioxythiophen, Copolymeren aus 4-Aminodiphenylamin und 4, 4'-Diaminodiphenylsulfon, Poly[2,5-di(2-thienyl)1-H-pyrrol-1-(p benzoesäure)], Poly(9H-N-alkylcarbazole), Poly(3,6-dinitro-9H-N-alkylcarbazole) und Poly(3,6-diamino-9H-N-alkylcarbazole); Copolymeren aus Tris-[4-(2-thienyl)phenyl]amin und 2,2-Bithiophen, Poly(tris(4-selen-2-yl)phenylamin, Poly(2,3,5,6-tetrafluoranilin), Poly(3,4-Ethylendioxypyrrol), Poly(anilin-co-ethyl-4-aminobenzoat), Poly(1-(3-pyridinyl)-2,5-di(2-thienyl)-1H-pyrrol) und Poly(1-(1, 1 0-phenanthrolinyl)-2,5-di(2-thienyl)-1H-pyrrol),
- ein elektrochromes Oxid, gewählt aus: WO₃, NiO, IrOx, V₂O₅, Nb₂O₅, CoOₓ, CeO₂, TiO₂,
- eine Hybridverbindung aus Polymer und Oxid,
- Viologene,
- eine Hexacyanometallatverbindung aus der Familie der Preußischen Farben wie Preußisch Blau Fe₄[Fe(CN)₆]₃.

8. Vorrichtung, umfassend ein einzelnes Substrat nach einem der vorhergehenden Ansprüche, wobei das Substrat ein opakes, lichtdurchlässiges oder transparentes Material ist, gewählt aus Papier, Kunststoffen, Textilien, Glas, Metallen, Keramik und Holz.

9. Vorrichtung nach einem der Ansprüche 1 bis 7, umfassend:
- ein erstes Substrat,
- ein zweites Substrat, und wobei eines der beiden Substrate ein lichtdurchlässiges oder transparentes Material ist und das andere Substrat ein opakes, lichtdurchlässiges oder transparentes Material ist, gewählt aus Papier, Kunststoffen, Textilien, Glas, Metallen, Keramik und Holz.

10. Verwendung einer elektrochromen Vorrichtung, wie sie nach einem der vorhergehenden Ansprüche definiert ist, für die Anzeige von Daten, die Herstellung von Autospiegeln und Visieren, die Herstellung von Gebäudeverglasungen oder die optische Tarnung im Infrarotbereich.

## Claims

1. An electrochromic device (50, 60) comprising
- at least one substrate (51, 61);
- a first electrode (53, 63) comprising a first aperture (52, 62) and a second electrode (54, 64) comprising a second aperture (55, 65);
- the two electrodes being positioned such that the two apertures are opposite;
- a layer of electrochromic material (56, 66) placed in the first aperture (52, 62) of the first electrode so as to form at least one electrical contact zone between the layer of electrochromic material and the first electrode, said layer of electrochromic material and said first electrode thus together forming a working electrode and the second electrode forming a counter-electrode;
- a layer of electrolyte (57, 67) sandwiched between the working electrode and the counter-electrode;
- an electrical power supply means configured to apply an electrical voltage to the two electrodes.

2. The electrochromic device as claimed in claim 1, wherein the first electrode and the second electrode are made of electrically conductive materials.

3. The electrochromic device as claimed in claim 2, wherein said electrodes are chosen from among copper, iron, silver, platinum, gold, carbon and conductive polymers.

4. The electrochromic device as claimed in one of the preceding claims, wherein the layer of electrolyte (57, 67) is a transparent material.

5. The electrochromic device as claimed in one of claims 1 to 3, wherein the layer of electrolyte (57, 67) is an opaque material.

6. The electrochromic device as claimed in one of the preceding claims, wherein the layer of electrolyte is chosen from among:
i) ionic liquids gelled or plasticized by at least one gelling or plasticizing agent;
ii) ionic liquids mixed with a thermo- or UV photo-polymerizable monomer/oligomer,
iii) electrolyte solutions of at least one electrolyte salt and/or of at least one acid in solution in a solvent, said solutions being gelled or plasticized by at least one gelling or plasticizing agent,
iv) electrolytic solutions comprising at least one oxide,
v) thin layers of a material comprising at least one hydrated oxide chosen from among the hydrated oxides such as, for example, hydrated Ta₂O₅ or hydrated ZrO₂.

7. The electrochromic device as claimed in one of the preceding claims, wherein the electrochromic material comprises at least one conductive polymer chosen from among poly(3,4-ethylenedioxythiophene), poly(3,4-ethylenedioxyselenophene), poly(3,4-propylenedioxythiophene), 4,7-bis(2,3-dihydrothieno[3,4-b][1,4]dioxin-5-yl)-2-phenyl-1H-benzo[d]imidazole, 1,4-bis(2-(3,4-ethylenedioxy)thienyl)benzene, copolymers based on pyrrole and on 3,4-ethylenedioxythiophene, copolymers of 4-aminodiphenylamine and of 4,4'-diaminodiphenylsulfone, poly[2,5-di(2-thienyl)-1H-pyrrole-1-(p-benzoic) acid], poly(9H-N-alkylcarbazoles), poly(3,6-dinitro-9H-N-alkylcarbazoles) and poly(3,6-diamino-9H-N-alkylcarbazoles); copolymers of tris-[4-(2-thienyl)phenyl]amine and of 2,2'-bithiophene, poly(tris(4-selen-2-yl)phenylamine, poly(2,3,5,6-tetrafluoroaniline), poly(3,4-ethylenedioxypyrrole), poly(aniline-co-ethyl-4-aminobenzoate), poly(1-(3-pyridinyl)-2,5-di(2-thienyl)-1H-pyrrole) and poly(1-(1,10-phenanthrolinyl)-2,5-di(2-thienyl)-1H-pyrrole),
- an electrochromic oxide chosen from among: WOs, NiO, IrOx, V₂O₅, Nb₂O₅, CoOx, CeO₂, TiO₂,
- a polymer-oxide hybrid compound,
- viologens,
- a hexacyanometallate compound from the family of Prussian colors such as Prussian blue Fe₄[Fe(CN)6]₃.

8. The device comprising a single substrate as claimed in one of the preceding claims, wherein said substrate is an opaque, translucent or transparent material chosen from among papers, plastics, textile materials, glasses, metals, ceramics and wood.

9. The device as claimed in one of claims 1 to 7, comprising:
- a first substrate;
- a second substrate, and wherein one of the two substrates is a translucent or transparent material and the other substrate is an opaque, translucent or transparent material chosen from among papers, plastics, textile materials, glasses, metals, ceramics and wood.

10. The use of an electrochromic device as defined in one of the preceding claims, for the display of data, the production of motor vehicle rear-view mirrors or of visors, the production of building glazing units or optical camouflage in the infrared.
